Europäisches Patentamt

European Patent Office

Office européen des brevets

(19)

(11) Veröffentlichungsnummer· **0 027 203**
**B1**

(12) # EUROPÄISCHE PATENTSCHRIFT

(45) Veröffentlichungstag der Patentschrift:
**19.09.84**

(21) Anmeldenummer: **80105899.1**

(22) Anmeldetag: **29.09.80**

(51) Int. Cl.³: **G 21 C 3/34**

(54) **Abstandshalter für Brennelemente wassergekühlter Kernreaktoren.**

(30) Priorität: **11.10.79 DE 2941320**

(43) Veröffentlichungstag der Anmeldung:
**22.04.81 Patentblatt 81/16**

(45) Bekanntmachung des Hinweises auf die Patenterteilung:
**19.09.84 Patentblatt 84/38**

(84) Benannte Vertragsstaaten:
**BE CH FR GB LI SE**

(56) Entgegenhaltungen:
**FR - A - 1 366 575**
**FR - A - 1 480 965**
**FR - A - 2 366 669**
**US - A - 3 679 546**
**US - A - 3 769 159**

(73) Patentinhaber: **KRAFTWERK UNION AKTIENGESELLSCHAFT**, Wiesenstrasse 35,
**D-4330 Mülheim (Ruhr) (DE)**

(72) Erfinder: **Steinke, Alexander, Stettiner Strasse 13,
D-8553 Ebermannstadt (DE)**

(74) Vertreter: **Mehl, Ernst, Dipl.-Ing., Postfach 22 01 76,
D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft einen Abstandshalter zur Zentrierung der Brennstäbe von Brennelementen wassergekühlter Kernreaktoren, bestehend aus einem Gitter hochkant angeordneter Blechstege aus einer Zirkonlegierung mit aus diesen ausgeformten starren Anlagenoppen für die Brennstäbe und diese Stege eingehängten federnden Anlageelementen aus Chrom-Nickel-Stählen, die aus einem Kopf- und Fußteil bestehen, die durch ein federndes Band mit einer ausgebogenen Anlegestelle am Brennstab einstückig miteinander verbunden sind und mit Fuß- und Kopfteil in Ausnehmungen der Blechstege eingesetzt und in schmalen seitlichen Schlitzen derselben verschoben und verriegelt sind.

Ein derartiger Abstandshalter, mit dem die Neutronenabsorption in einem Kernreaktor gering gehalten werden kann, ist aus der US-A-3 679 546 bekannt. Die federnden Anlageelemente dieses Abstandshalters sind durch Aussparungen verriegelt, die sich an den Außenkanten von Blechstangen befinden und in die jeweils ein federndes Teil des betreffenden Anlageelementes eingerastet ist. Die starren Anlagenoppen des bekannten Abstandshalters kommen durch wellenartige Ausbildung anderer Blechstege zustande.

Der Erfindung liegt die Aufgabe zugrunde, diesen Abstandshalter so weiter zu bilden, daß der relativ einfache Aufbau des Abstandshalters und der federnden Anlageelemente sowie eine einfache Montage gesichert bleiben und trotzdem bei Bruch eines federnden Anlageelementes die mechanische Sicherung der Bruchteile gegen Herausfallen aus dem Abstandshalter verbessert ist.

Zur Lösung dieser Aufgabe kann ein Abstandshalter der eingangs erwähnten Art erfindungsgemäß dadurch gekennzeichnet sein, daß die Verriegelung durch Einschnappen des federnden Teiles der Anlageelemente in einer Erweiterung des seitlichen Schlitzes erfolgt. Kommt es zu einem Bruch eines federnden Anlageelementes, so können Bruchteile selbst dann nicht aus dem Abstandshalter herausfallen, wenn sie durch äußere Einwirkung verbogen werden.

Zur Lösung der gleichen Aufgabe kann ein Abstandshalter der eingangs erwähnten Art erfindungsgemäß auch dadurch gekennzeichnet sein, daß die Verriegelung durch das Einfügen der anderen Blechstege zur Ausbildung des vollständigen Abstandshaltergitters vorgesehen ist. Dies bedeutet eine besonders einfache Montage der federnden Anlageelemente.

Aus der FR-A-1 480 965 ist es zwar bekannt, die Blechstege eines Abstandshalters zur Ausbildung des vollständigen Abstandshaltergitters ineinander einzufügen. Bei diesem Abstandshalter sind jedoch nicht nur die starren Anlagenoppen für die Brennstäbe, sondern auch die federnden Anlageelemente aus den Blechstäben herausgeformt, so daß die aus dem gleichen Werkstoff wie die Blechstege bestehenden federnden Anlageelemente nicht durch Blechstege verriegelt sind.

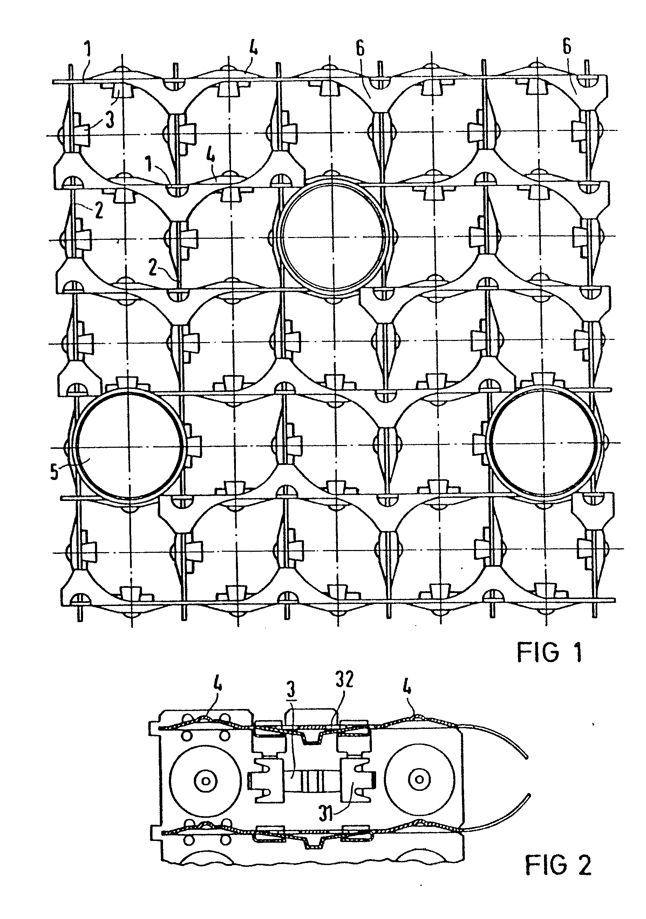

Zur weiteren Erläuterung sei auf die Fig. 1 bis 6 sowie 7 bis 12 verwiesen.

Die Fig. 1 zeigt die Draufsicht auf ein Abstandshaltergitter, in dessen Maschen die einzelnen Brennstäbe durch die federnden Anlageelemente 3 und die starren Anlagenoppen 4 zentriert sind. In einigen Maschen sind dabei auch Regelstabführungsrohre 5 aufgenommen. Die Maschen selbst bestehen aus hochkant angeordneten ineinander gesteckten und verschweißten Blechbändern 1 und 2. Diese sind wenigstens teilweise mit die Kühlmittelströmung verwirbelnden Ablenkfahnen 6 in an sich bekannter Weise versehen.

Die starren Anlagenoppen 4 sind jeweils in der Mitte der Maschenwände ausgeprägt und sind auf ihrem höchsten Punkt mit einer sehr kleinen Ausstülpung für die Anlage am Brennstab versehen. Dies bewirkt am Brennstab nur eine sehr kleine Anlagefläche und eine möglichst geringe Behinderung der Kühlmittelströmung um den Brennstab. Im allgemeinen sind diese Anlagenoppen 4 kreisförmig, sie können jedoch auch oval ausgeführt sein — in Strömungsrichtung — und tragen damit zu einer weiteren Verringerung des Kühlmittelströmungswiderstandes in der Abstandshaltermasche bei.

Die federnden Anlageelemente 3 sind ebenfalls in der Mitte der Maschenwände angeordnet, wobei in an sich bekannter Weise einem derartig federnden Anlageelement auf der gegenüberliegenden Maschenwand zwei starre Anlagenoppen 4 gegenüberliegen, so daß sich dadurch eine sogenannte Dreipunkthalterung des zentrierten Brennstabes ergibt.

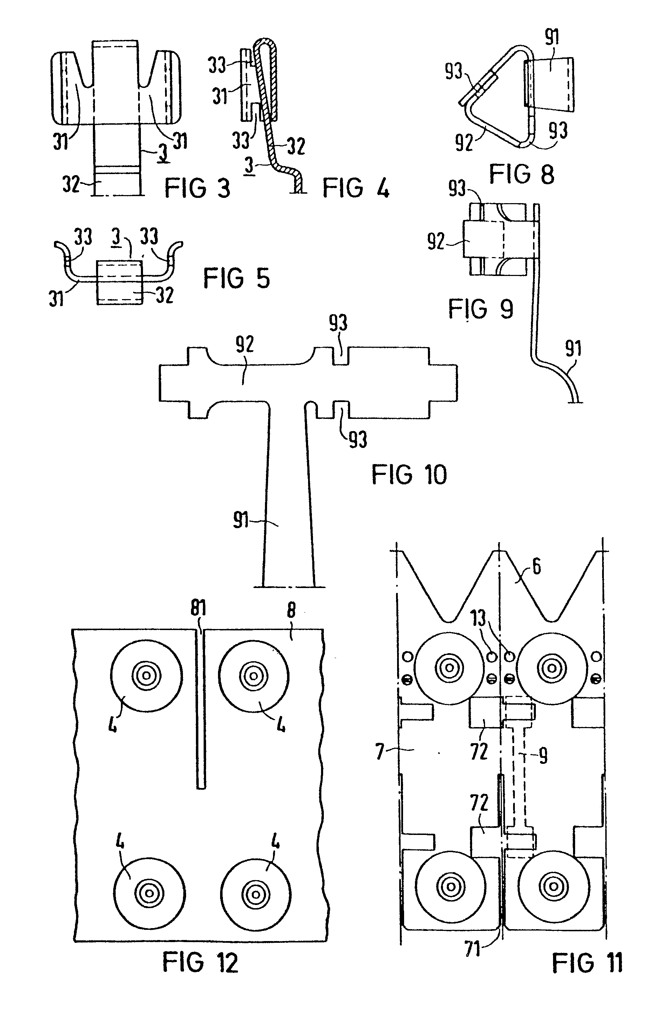

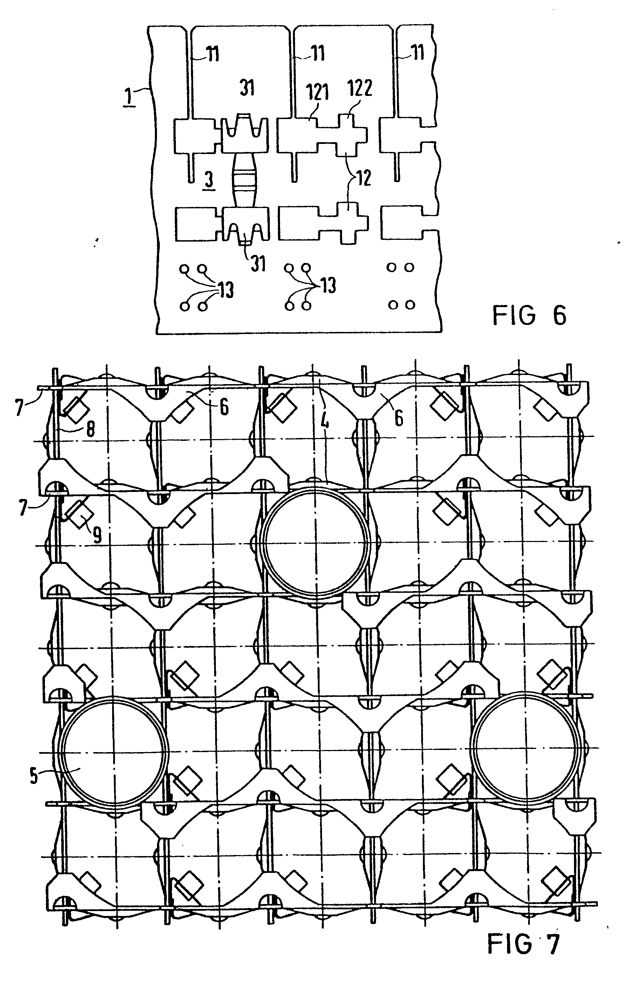

Eine Seitenansicht einer solchen Abstandshaltermasche mit eingesetztem federndem Anlageelement 3 ist in Fig. 2 dargestellt. Das Anlageelement selbst ist in Fig. 3, 4 und 5 zu sehen, wobei Fig. 3 und Fig. 4 in Frontal- und Seitenansicht jeweils nur die obere Hälfte derselben zeigt, Fig. 5 eine Draufsicht. Hieraus ist der einstückige Aufbau dieses Anlageelementes zu sehen, aus dem Kopfstück 31 ist der eigentlich federnde Teil 32 entsprechend Fig. 4 abgebogen. Das Kopfstück ist nach Fig. 5 auf beiden Seiten abgewinkelt und mit einem Schlitz 33 oben und unten versehen.

Die Fig. 6 zeigt einen Abstandshaltersteg 1 mit den Schlitzen 11 für das Ineinanderfügen der Gitterstege sowie den Ausnehmungen 12 für das Einsetzen des federnden Anlageelementes 3. Auf der rechten Seite der Figur ist diese Ausnehmung dargestellt, sie besteht aus einem oberen Teil und aus einem unteren Teil für jeweils das Kopf- und Fußstück des federnden Anlageelementes 3. Für den Zusammenbau wird dieses Element mit dem Kopf- und Fußstück in die Ausnehmung 121 eingesetzt und sodann nach rechts verschoben. Dabei greifen die Schlitze 33 in den Steg ein, letztlich rastet das federnde Teil 32 in die größere Ausnehmung 122 ein, so daß das federnde Anlageelement 3 in der Mitte der Abstandshaltermaschenwand, siehe die linke Seite dieser Figur, fest sitzt. Diese Konstruktion gewährleistet auch beim Bruch der Feder 32, daß die dann nicht mehr miteinander verbundenen Kopf- und Fußstücke 31 dennoch im Verband des Abstandshalters bleiben und nicht in unkontrollierter Weise in das Kühlsystem des Kernreaktors gelangen können. Die in Fig. 6 weiter schematisch dargestellten aus dem Material des Steges 1 ausgeprägten Warzen 13 dienen in an sich bekannter Weise der Führung des einzusetzenden Steges 2, wie er in der Seitenansicht in Fig. 2 ebenfalls mit eingesetztem federnden Anlageelement 3 zu sehen ist.

In den Fig. 7 bis 12 ist die zweite Ausführungsart dargestellt, bei diesem befinden sich entsprechend Fig. 7 die federnden Anlageelemente 9 in den Ecken jeder Abstandshaltermasche. Sie sind ebenfalls aus einem Kopf- und Fußstück 92 und einem diesen verbindenden Federsteg 91 aufgebaut. Die spezielle Formgebung derselben ist in Draufsicht und Seitenaufsicht in den Fig. 8 und 9 dargestellt, die Fig. 10 zeigt die obere Hälfte des federnden Anlageelementes in einer Abwicklung. Der Teil 92 dieser Abwicklung enthält oben und unten kurze Schlitze 93, die nach dem Biegeplan in Fig. 8 sowie der Seitenansicht in Fig. 9 gegenüberstehen. Eine metallurgische Verbindung der Enden des Teiles 92 ist nicht notwendig, da sich dieses nach dem Einsatz in der Abstandshaltermasche selbst hält.

Die Fig. 11 zeigt einen Ausschnitt des Abstandshaltersteges 7 mit stufenweise abgesetzten Ausnehmungen 72 sowie den Schlitzen 71 für das Einfügen der Stege 8, wie einer in Fig. 12 daneben ausschnittsweise dargestellt ist. Die linke Seite der Ausnehmungen ist so groß, daß Kopf- und Fußstück der Federelemente 9 eingesetzt werden können, durch Verschieben des Federelementes nach rechts greifen die Schlitze 93 über die Maschenwand, so daß das federnde Abstandselement nicht mehr senkrecht zur Ebene des Steges 7 weggenommen werden kann. Die seitliche Verriegelung der federnden Abstandshalterelemente 9 wird durch das Einschieben der Stege 8 bewirkt. In Fig. 11 ist ein federndes Element 9 gestrichelt eingezeichnet, dessen seitliche Halterung einmal durch das Ende der Ausnehmung 72 nach rechts gegeben ist und zum anderen durch den über den Schlitz 71 eingeführten Blechsteg 8, der seinerseits wieder mit einem Schlitz 81 versehen ist und durch die ausgeprägten Noppen 13, wie in der vorhergehenden Ausführungsart, seitlich geführt ist.

Auch bei dieser Ausführungsart ist sichergestellt, daß bei einem Bruch des federnden Teiles 91 Kopf- und Fußstück 92 im Verband des Steggitters verbleiben, was für die Betriebssicherheit des Brennelementes und des Kernreaktors von wesentlicher Bedeutung ist.

Gemeinsam ist die gegenseitige mechanische Verklinkung zwischen den Stegwänden aus einer Zirkonlegierung und den federnden Anlageelementen aus Chrom-Nickel-Stahl, wie z. B. Inconel, und der Verriegelung gegen das Lösen einzelner Teile entweder durch die sich kreuzenden Maschenwände, falls die federnden Anlageelemente in den Ecken angeordnet werden sollen oder durch Einrasten der federnden Teile in entsprechende Ausnehmungen der Maschenwände. Die in den Figuren dargestellten Biegeformen der federnden Anlageelemente können selbstverständlich auch abgewandelt werden je nach der gewünschten bzw. benötigten Federcharakteristik. Abschließend sei noch darauf hingewiesen, daß die Abstützung dieser federnden Teile innerhalb der Maschenwände erfolgt, so daß der beim Einsatz der Brennstäbe durch Verformung des federnden Teiles sich ergebende axiale Druck von diesen aufgefangen wird.

## Patentansprüche

1. Abstandshalter zur Zentrierung der Brennstäbe von Brennelementen wassergekühlter Kernreaktoren, bestehend aus einem Gitter hochkant angeordneter Blechstege aus einer Zirkonlegierung mit aus diesen ausgeformten starren Anlagenoppen für die Brennstäbe und in diese Stege eingehängten federnden Anlageelementen aus Chrom-Nickel-Stählen, die aus einem Kopf- und Fußteil bestehen, die durch ein federndes Band mit einer ausgebogenen Anlagestelle am Brennstab einstückig miteinander verbunden sind und mit Fuß- und Kopfteil in Ausnehmungen der Blechstege eingesetzt und in schmalen seitlichen Schlitzen derselben verschoben und verriegelt sind, dadurch gekennzeichnet, daß die Verriegelung durch Einschnappen des federnden Teiles (32) der Anlageelemente (3) in einer Erweiterung (122) des seitlichen Schlitzes erfolgt.

2. Abstandshalter zur Zentrierung der Brennstäbe von Brennelementen wassergekühler Kernreaktoren, bestehend aus einem Gitter hochkant angeordneter Blechstege aus einer Zirkonlegierung mit aus diesen ausgeformten starren Anlagenoppen für die Brennstäbe und in diese Stege eingehängten federnden Anlageelementen aus Chrom-Nickel-Stählen, die aus einem Kopf- und Fußteil bestehen, die durch ein federndes Band mit einer ausgebogenen Anlegestelle am Brennstab einstückig miteinander verbunden sind und mit Fuß- und Kopfteil in Ausnehmungen der Blechstege eingesetzt und in schmalen seitlichen Schlitzen derselben verschoben und verriegelt sind, dadurch gekennzeichnet, daß die Verriegelung durch das Einfügen der anderen Blechstege (2, 1) zur Ausbildung des vollständigen Abstandshaltergitters vorgesehen ist.

3. Abstandshalter nach Anspruch 1 oder 2, dadurch gekennzeichnet, daß die starren Anlagenoppen (4) aus kreisrunden oder ovalen Ausprägungen bestehen, die auf ihrem höchsten Punkt mit einer sehr kleinen Ausstülpung für die Anlage am Brennstab versehen sind.

## Claims

1. A spacer for centering the fuel rods of fuel elements of water-cooled nuclear reactors, consisting of a grid of sheet metal members which are arranged on end and are made of a zirconium alloy, having rigid contact knobs for the fuel rods, which project from said sheet metal members, and having resilient contact elements which are inserted into these members, are made of chromium-nickel steels and consist of top and base parts connected together to form a single piece by a resilient strip with an outwardly bent contact point for the fuel rod and which have base and top parts inserted into recesses of the sheet metal members and are displaces and locked in narrow lateral slots of the sheet metal members, characterized in that locking takes place by snapping of the resilient part (32) of the contact elements (3) into a widened section (122) of the lateral slot.

2. A spacer for centering the fuel rods of fuel elements of water-cooled nuclear reactors, consisting of a grid of sheet metal members which are arranged on end and are made of a zirconium alloy, having rigid contact knobs for the fuel rods, which project from said sheet metal members, and having resilient contact elements which are inserted into these members, are made of chromium-nickel steels and consist of top and base parts which are connected together to form a single piece by a resilient strip with an outwardly bent contact point for the fuel rod, and which have base and top parts inserted into recesses of the sheet metal members and are displaced and locked in narrow lateral slots of said sheet metal members, characterized in that locking is carried out by inserting the other sheet metal members (2, 1) to form the complete spacer grid.

3. A spacer according to claim 1 or claim 2, characterized in that the rigid contact knobs (4) consists of circular or oval stamped out raised portions which at their highest points are provided with a very small protuberance for contact with the fuel rod.

## Revendications

1. Entretoise de centrage des crayons combustibles d'assemblages combustibles de réacteurs nucléaires refroidis par de l'eau, constituée d'une grille de lames, disposées sur chant, en un alliage de zirconium, ayant des bossages d'appui rigides formés dans celles-ci pour les crayons combustibles et des éléments d'appui élastiques en acier au chrome-nickel, qui sont accrochés à ces lames, qui sont constitués d'une partie formant tête et formant pied, qui sont reliés les uns aux autres en une pièce par une attache élastique avec un point d'appui échancré sur le crayon combustible et qui sont introduits par la partie formant pied et formant tête dans des cavités ménagées dans les lames et déplacés et verrouillés dans de petites fentes latérales de celles-ci, caractérisée en ce que le verrouillage s'effectue par encliquetage de la partie élastique (32) des éléments d'appui dans une partie élargie (122) de la fente latérale.

2. Entretoise de centrage des crayons combustibles d'assemblages combustibles de réacteurs nucléaires refroidis par de l'eau, constituée d'une grille de lames disposées sur chant en un alliage de zirconium ayant des bossages d'appui rigides formés dans celles-ci pour les crayons combustibles et des éléments d'appui élastiques en aciers au chrome-nickel, qui sont accrochés à ces lames, qui sont constitués d'une partie formant tête et formant pied, qui sont reliés les uns aux autres en une pièce par une attache élastique avec un point d'appui échancré sur le crayon combustible et qui sont introduits par la partie formant pied et formant tête dans des cavités ménagées dans les lames et déplacés et verrouillés dans de petites fentes latérales de celles-ci, caractérisée en ce que le verrouillage est prévu par l'insertion des autres lames (2, 1) pour la constitution de la grille d'entretoisement complète.

3. Entretoise suivant la revendication 1 ou 2, caractérisée en ce que les bossages d'appui rigides (4) sont constitués de parties estampées circulaires ou ovales, qui sont munies, en leur point le plus élevé, d'une très petite protubérance pour l'appui sur un crayon combustible.

FIG 1

FIG 2

FIG 3

FIG 4

FIG 5

FIG 8

FIG 9

FIG 10

FIG 12

FIG 11

FIG 6

FIG 7